# EUROPEAN PATENT APPLICATION

(11) **EP 0 528 412 A1**
(43) Date of publication of application: **24.02.1993**
(21) Application number: 92114135.4
(22) Date of filing: 19.08.1992
(51) Int. Cl.: B60K 6/04

(54) **Vehicular motor system**

(30) Priority: 19.08.1991 JP 232315/91; 19.08.1991 JP 207061/91; 19.08.1991 JP 207062/91
(71) Applicant: AISIN AW CO., LTD., Anjo-shi Aichi-ken (JP)
(72) Inventor: Toyoda, Minoru, Nagoya-shi, Aichi-ken (JP); Moroto, Shuzo, Nagoya-shi, Aichi-ken (JP); Kawamoto, Mutsumi, Aichi-ken (JP); Miyaishi, Yoshinori, Okazaki-shi, Aichi-ken (JP); Tsuzuki, Shigeo, Aichi-ken (JP); Kato, Kenji, Okazaki-shi, Aichi-ken (JP)
(74) Representative: VOSSIUS & PARTNER

(57) **Abstract**

Herein disclosed is a vehicular motor system which comprises: an engine (21) adapted to run by burning a fuel; a motor (25) enabled to rotate its rotor by feeding an electric current to the coil of its stator and to generate an electric power by having its rotor rotated; a clutch (24) arranged between the engine and the motor (25) for transmitting the rotation selectively between a transmission shaft connected to the rotor and the output shaft of the engine; a differential mechanism (23) connected to the transmission shaft for transmitting the rotation from the transmission shaft to righthand and lefthand drive wheels (42); generation means (28) for generating an electric power from the rotation of the engine; and starting means for starting the engine.

## Description

The present invention relates to a vehicular motor system which is mounted on a vehicle and driven electrically.

In a vehicle of the prior art, generally speaking, the rotation, which is generated by running an engine or a gasoline engine, is changed in speed through a transmission such as an automatic or manual transmission and is transmitted to drive wheels. The gasoline engine burns a mixture of gasoline and air under a compressed state so that the combustion energy generated at this time is converted into a torque. As a result, a noise is generated by the combustion, and still the worse the exhaust emission pollutes the environment.

On the other hand, there is provided an electric automobile which has its engine replaced by an electric motor to eliminate the noise and the exhaust emission. In this case, the motor is mounted together with a battery on the vehicle to drive and run the drive wheels. As a result, a serious noise is hardly generated as the vehicle runs, and no exhaust gas is generated.

In this case, however, the electric car is limited in its amount of electricity to be charged in the battery so that it has an accordingly limited cruising range. Thus, a battery having a sufficient capacity has to be mounted so as to ensure a sufficient cruising range. In case, on the other hand, a motor used is so sized as to be mounted on an ordinary vehicle, its torque is lower than that generated by the engine so that it is not sufficient for a quick start, a high load run and/or a high speed run.

Thus, there has been provided a hybrid type drive unit using the engine and the motor together.

The vehicle thus far provided is classified into a variety of kinds including a series type, in which a generator is driven by the engine to generate an electric energy thereby to rotate the motor so that the rotation is transmitted to the drive wheels, and a parallel type in which the engine and the motor are used to rotate the drive wheels directly. The latter parallel type is further classified into a one-train type, in which the drive trains of the engine and the motor are connected into one train (as disclosed in U.S.P. No. 4,533,011), and a two-train type in which the front wheels and the rear wheels are independently driven by the engine and the motor.

In the hybrid type drive unit of the prior art as described above, however, the vehicle having the engine and the transmission mounted thereon is further equipped with the motor so that it is large-sized but cannot use any existing part to have its manufacture cost raised.

In the one-train type having its engine train and motor train connected to each other, for example, the motor is connected between the engine and the transmission, and clutches are further arranged between the motor and the engine and between the motor and the transmission so as to connect and disconnect them.

In case of the drive unit thus constructed, the motor and the transmission are connected in urban areas, for example, so that the vehicle is enabled to be run by transmitting the rotation of the motor to the transmission. In rural areas, on the other hand, the engine and the transmission are connected so that the vehicle is enabled to be run by transmitting the rotation of the engine to the transmission. During the run using the motor, moreover, the rotation of the motor is amplified by the transmission so that an increased torque is transmitted to the drive wheels.

However, the drive unit thus made has found it difficult to start the vehicle only with the torque generated by the motor so that it has to be equipped with a transmission for amplifying the torque of the motor. Thus, the two clutches and the motor have to be arranged between the engine and the transmission so that the drive train is elongated to increase the size of the vehicle. In order to retain a space for being arranged with the two clutches and the motor, moreover, the existing parts such as the engine or the transmission have to be changed in design to deteriorate their mounting, and still the worse the manufacture cost is increased. Especially in the FF (i.e., Front engine Front drive) type vehicle, the distance between the drive unit and the wheels is shortened not to provide a predetermined or more value for the steering angle which is required to turn the vehicle by the steering unit.

Moreover, none of the torque characteristics are considered for switching the running modes by the motor and the engine, so that the energy efficiency is deteriorated to drop the mileage.

Moreover, the two clutches and the motor are arranged in addition to the aforementioned engine and transmission. In the FF type vehicle, therefore, the weight to be applied to the front wheels to deteriorate the steerability thereby not only to give a heavy steering feel but also to increase the wear of tires.

An object of the present invention is to solve the problems of the drive unit of the prior art as described above and to provide an inexpensive vehicular motor system which can not only utilize the torque generated by the engine and the torque generated by the motor but also use other existing parts without increasing the size of the vehicle.

In order to achieve this object, the vehicular motor system of the present invention is constructed to comprise: an engine adapted to be run by burning a fuel; a motor enabled to rotate its rotor by feeding an electric current to the coil of its stator and to generate an electric power by having its rotor rotated; and a clutch arranged between the engine and the motor. This clutch operates to transmit the rotation selectively between a transmission shaft connected to the rotor and the rotational shaft of the engine.

To the transmission shaft, moreover, there is connected a differential mechanism for transmitting the rotation from the transmission shaft to the righthand and lefthand drive wheels. The vehicular motor system further comprises: generation means for generating an electric power from the rotation transmitted to the transmission shaft; and starting means for starting the engine.

According to the present invention: the engine is adapted to be run by burning a fuel; the motor is enabled to rotate its rotor by feeding an electric current to the coil of its stator and to generate an electric power by having its rotor rotated; and the clutch is arranged between the engine and the motor. The clutch transmits the rotation selectively between the transmission shaft connected to the rotor and the rotational shaft of the engine. The rotation thus transmitted to the transmission shaft is transmitted to the differential mechanism and further to the righthand and lefthand drive wheels.

At the time of a normal start under a light load, the engine is stalled or held in an idle state, and the clutch is released, but the motor is run. In this case, the vehicle can be started only by the torque generated by the motor.

At the time of a quick start or a slope start under a heavy load, the engine and the motor are run, and the clutch is engaged. In this case, the vehicle can be started by the torque generated by the engine and the torque generated by the motor.

During the run under a medium/light load, on the other hand, the engine is stalled or held in an idle state, and the clutch is released, but the motor is run. In this case, the vehicle can be run only by the torque generated by the motor.

During a slope run or the like under a heavy load, the engine and the motor are run, and the clutch is engaged. In this case, the vehicle can be run by the torque generated by the engine and the torque generated by the motor.

At the regenerative braking time, on the other hand, the engine is stalled or held in an idle state, and the clutch is released, but the motor is utilized as the generator. In this case, the rotation of the drive wheels at the time of braking the vehicle is transmitted to the motor to cause the motor to function as the generator.

At the time of a high speed cruising on an expressway, on the other hand, the engine is run, and the clutch is engaged, but the motor is stopped. In this case, the vehicle is run only by the torque generated by the engine.

There is further provided the generation means for generating an electric power from the rotation of the engine so that the excess torque of the engine can be converted into an electric energy and stored in the battery. At the time of starting the engine, the starting means is run.

Since, moreover, the conventional transmission is replaced by the motor and the clutch, the vehicle can utilize other existing parts without being large-sized.

Other objects and features of the present invention will become apparent from the following description to be made with reference to the accompanying drawings, in which:
Fig. 1 is a conceptional diagram showing a vehicular motor system of A type according to the present invention;
Fig. 2 is a conceptional diagram showing a vehicular motor system of B type according to the present invention;
Fig. 3 is a table enumerating the operations of the vehicular motor system of the present invention;
Fig. 4 is a diagram showing a first mounting example of the vehicular motor system of the present invention, which is mounted on a vehicle of FR type;
Fig. 5 is a diagram showing a second mounting example of the vehicular motor system of the present invention, which is mounted on a vehicle of FR type;
Fig. 6 is a diagram showing a first mounting example of the vehicular motor system of the present invention, which is mounted on a vehicle of the type with a counter gear being arranged in a middle portion;
Fig. 7 is a diagram showing a second mounting example of the vehicular motor system of the present invention, which is mounted on a vehicle of the type with a counter gear being arranged in a middle portion;
Fig. 8 is a diagram showing a third mounting example of the vehicular motor system of the present invention, which is mounted on a vehicle of the type with a counter gear being arranged in a middle portion;
Fig. 9 is a diagram showing a fourth mounting example of the vehicular motor system of the present invention, which is mounted on a vehicle of the type with a counter gear being arranged in a middle portion;
Fig. 10 is a section showing a vehicular motor system according to a first embodiment of Fig. 9;
Fig. 11 is a section showing a vehicular motor system according to a second embodiment of Fig. 9;
Fig. 12 is a diagram showing a first mounting example of the vehicular motor system of the present invention, which is mounted on a vehicle of the type with a counter gear being arranged in a rear portion;
Fig. 13 is a diagram showing a second mounting example of the vehicular motor system of the present invention, which is mounted on a vehicle of the type with a counter gear being arranged in a rear portion;
Fig. 14 is a section showing the vehicular motor system of Fig. 12;
Fig. 15 is a section showing the vehicular motor system of Fig. 13;
Fig. 16 is a diagram showing a first mounting example of a vehicular motor system which is mounted on a chain type vehicle;
Fig. 17 is a diagram showing a second mounting example of a vehicular motor system which is mounted on a chain type vehicle;
Fig. 18 is a diagram showing a third mounting example of a vehicular motor system which is mounted on a chain type vehicle;
Fig. 19 is a diagram showing a fourth mounting example of a vehicular motor system which is mounted on a chain type vehicle;
Fig. 20 is a diagram showing a first mounting example of a vehicular motor system which is mounted on a longitudinal FF vehicle;
Fig. 21 is a diagram showing a second mounting example of a vehicular motor system which is mounted on a longitudinal FF vehicle;
Fig. 22 is a diagram showing a third mounting example of a vehicular motor system which is mounted on a longitudinal FF vehicle; and
Fig. 23 is a diagram showing a fourth mounting example of a vehicular motor system which is mounted on a longitudinal FF vehicle.

The present invention will be described in detail in the following in connection with the embodiments thereof with reference to the accompanying drawings.

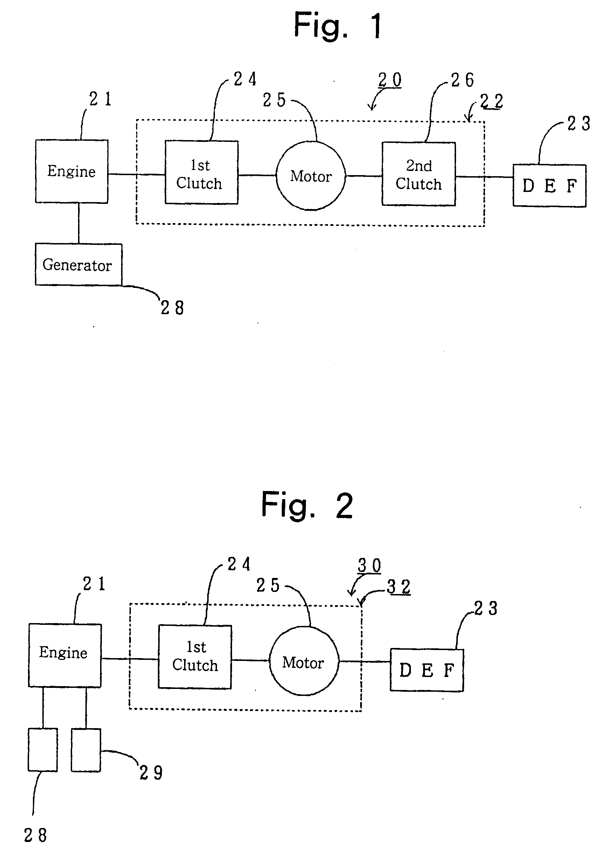

Fig. 1 is a conceptional diagram showing a vehicular motor system of A type according to the present invention, and Fig. 2 is a conceptional diagram showing a vehicular motor system of B type according to the present invention.

In Fig. 1: reference numeral 20 designates a vehicular motor system of A type; numeral 21 designates an engine; numeral 22 designates a drive unit 22 connected to the engine 21; and numeral 23 designates a final reduction gear mechanism or a differential mechanism (as will be shortly referred to as the "DEF") connected to the drive unit 22. This drive unit 22 is arranged in place of the conventional vehicular transmission and can utilize the automatic transmission casing of the aforementioned conventional vehicle as it is. Incidentally, the final reduction gear mechanism is used to decelerate the rotation of the transmission, before inputted to the differential mechanism, thereby to increase the torque and is usually constructed of a pair of gears. Thus, the final reduction gear mechanism is given only one gear ratio so that it is discriminated from a transmission capable of selecting a plurality of gear ratios to change the speed.

On the other hand, the drive unit 22 is composed of: a first clutch 24 connected to the engine 21; a motor 25 connected to the first clutch 24; and a second clutch 26 connected to the motor 25. As a result, the engine 21 and the motor 25 can be selectively engaged and disengaged by the first clutch 24, and the motor 25 and the DEF 23 can be selectively engaged and disengaged by the second clutch 26.

Specifically, the engine 21 and the motor 25 can be exclusively connected by engaging the first clutch 24 only. The motor 25 and the DEF 23 can be exclusively connected by engaging the second clutch 26 only. The engine 21 and the motor 25 can be connected to the DEF 23 by engaging both the first clutch 24 and the second clutch 26.

Reference numeral 28 designates a generator which is driven by the engine 21 for charging up a battery acting as a power source for driving the motor 25 and for supplying an electric current to accessories. The generator 28 can not only utilize the excess torque of the engine 21 but also generate the electric power even if the first clutch 24 is released to disconnect the engine 21.

On the other hand, the drive of the engine 21 can be started by releasing the second clutch 26 and by engaging the first clutch 24 to run the motor 25. Hence, the vehicular motor system 20 of the A type can be dispensed with the starter motor.

In the vehicular motor system 20 of the A type thus constructed is equipped with the second clutch 26 to engage and disengage the second clutch 26 and the DEF 23. On the contrary, a vehicular motor system 30 of B type is equipped with the first clutch 24 only but not the second clutch 26.

In Fig. 2: the numeral 30 designates the vehicular motor system of the B type; the numeral 21 designates the engine; numeral 32 designates a drive unit connected to the engine 21; and the numeral 23 designates the DEF connected to the drive unit 32. This drive unit 32 is arranged in place of the transmission of the conventional vehicle and can use the automatic transmission casing of the conventional vehicle as it is.

On the other hand, the drive unit 32 is composed of: the first clutch 24 connected to the engine 21; and the motor 25 connected to the first clutch 24. As a result, the engine 21 and the motor 25 can be selectively engaged and disengaged by the first clutch 24. In other words, the engine 21 and the motor 25 can be connected by engaging the first clutch 24.

Moreover, the numeral 28 designates a generator which is driven by the engine 21 for charging up the battery and for supplying the electric current to the accessories, and numeral 29 designates a starter motor for starting the drive of the engine 21.

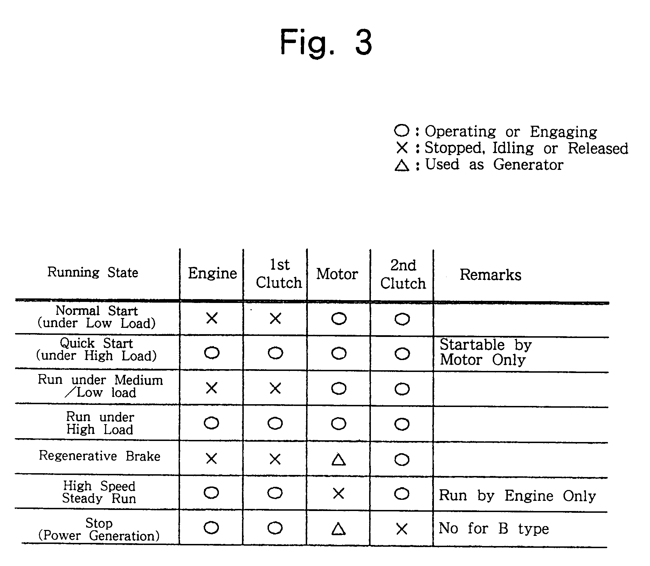

Next, the operations of the vehicular motor system thus constructed will be described with additional reference to Fig. 3.

Fig. 3 is a table enumerating the operations of the vehicular motor system of the present invention. Fig. 3 enumerates the operations of the vehicular motor system 20 of the A type but can also be applied to the vehicular motor system 30 of the B type by eliminating the second clutch 26.

First of all, at a normal start under a light load, the engine 21 is stalled or held in the idle state, and the first clutch 24 is released. On the contrary, the motor 25 is run, and the second clutch 26 is engaged. In this case, the motor 25 and the DEF is connected through the second clutch 26 so that the vehicle can be started only by the torque generated by the motor 25.

In this meanwhile, the engine 21 is completely stalled in rotation or held in the idle state. If the engine 21 is completely stalled, no exhaust gas is emitted. If another running state becomes effective to require a run by the engine 21, this engine 21 has to be ignited to drop the startability. If held in the idle state, on the other hand, the startability is improved. During the run by the motor 25, however, the engine 21 is rotating at all times to emit the exhaust gases. In this case, the idling may be accomplished at such an engine r.p.m. as to suppress the exhaust emission to a low level.

At the quick start or the slope start under the heavy load, the engine 21 and the motor 25 are run, and the first clutch 24 and the second clutch 26 are engaged so that the engine 21 and the motor 25 are connected to the DEF 23. In this case, the vehicle can be started by the torque generated by the engine 21 and the torque generated by the motor 25. At this time, the engine 21 can be run in the state of a reduced exhaust emission. Incidentally, the vehicle can also be started like the normal start only by the torque generated by the motor 25.

During the run under the medium/low loads, on the other hand, the engine 21 is stalled or held in the idle state, and the first clutch 24 is released. On the contrary, the motor 25 is run, and the second clutch 26 is engaged. In this case, the motor 25 and the DEF 23 are connected through the second clutch 26 so that the vehicle can be run only by the torque generated by the motor 25.

During the run on a slope or the like under a heavy load, the engine 21 and the motor 25 are run, and the first clutch 24 and the second clutch 26 are engaged so that the engine 21 and the motor 25 are connected to the DEF 23. In this case, the vehicle can be run by the torque generated by the engine 21 and the torque generated by the motor 25. At this time, the engine 21 can be run in the state of a reduced exhaust emission.

In the vehicle using the motor 25, generally speaking, the kinetic energy is neither frictionally converted into a thermal energy nor consumed, if the vehicle is to be braked, but the rotation of the drive wheels is transmitted to the motor 25 so that it may be utilized for the power generation, thus constituting a regenerative brake. In the vehicular motor systems 20 and 30 of the present invention, too, this function of the regenerative brake is utilized so that the kinetic energy may be recovered to generate an electric power, in case the vehicle is to be braked, thereby to charge up the battery.

At the regenerative braking time, more specifically, the engine 21 is stalled or held in the idle state, and the first clutch 24 is released. On the contrary, the motor 25 is utilized as the generator, and the second clutch 26 is engaged. In this case, the motor 25 and the DEF 23 are connected through the second clutch 26 to transmit the rotation of the drive wheels at the time of braking the vehicle to the motor 25 so that the motor 25 is caused to function as the generator.

At the time of a high speed steady run on an expressway, on the other hand, the engine 21 is run, and the first clutch 24 and the second clutch 26 are engaged to connect the engine 21 and the DEF 23. In this meanwhile, the motor 25 is stopped so that the vehicle is run only by the torque generated by the engine 21.

At the vehicle stopping time, on the other hand, the engine 21 is run, and the first clutch 24 is engaged, but the second clutch 26 is released. Since, in this case, the second clutch 26 is released, the torque generated by the engine 21 is transmitted not to the drive wheels but to the motor 25 so that the motor 25 is caused to function as the generator. Since the second clutch 26 has to be released in this running state, this structure can be utilized only in the vehicular motor system of the A type.

Here will be described the structures in which the vehicular motor systems 20 and 30 thus constructed are mounted on an actual FR type vehicle.

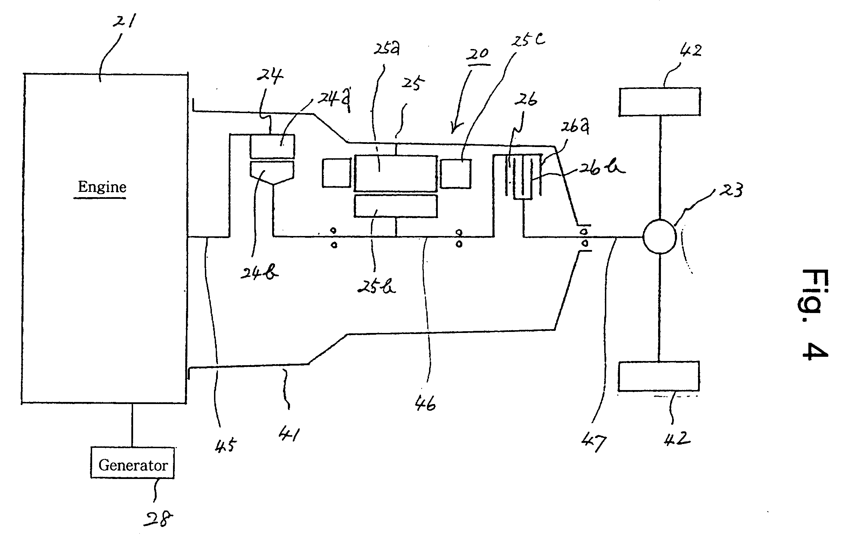

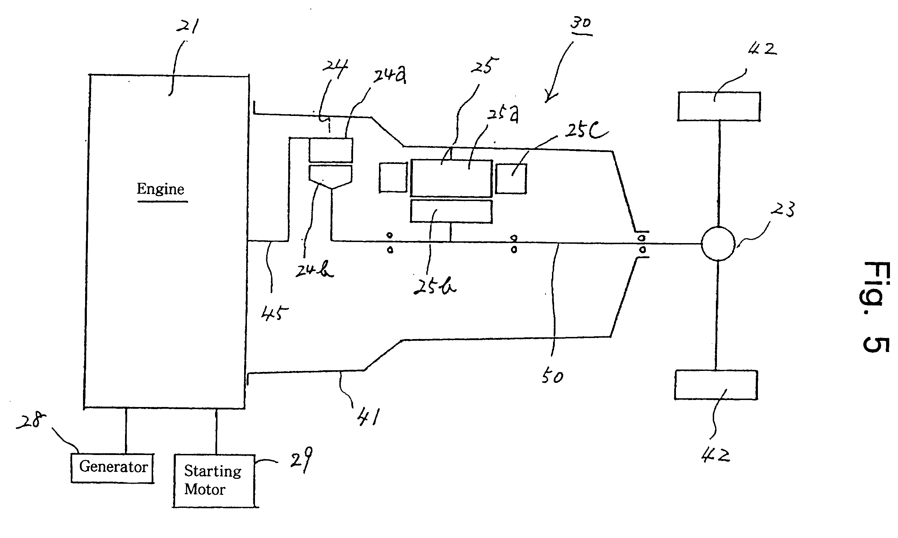

Fig. 4 is a diagram showing a first mounting example of the vehicular motor system of the present invention, which is mounted on the FR type vehicle, and Fig. 5 is a diagram showing a second mounting example of the vehicular motor system of the present invention, which is mounted on the FR type vehicle. In Fig. 4, the vehicular motor system 20 of the A type is mounted on an FR (Front engine Rear Drive) type vehicle. The numeral 21 designates an engine; numeral 23 designates a DEF; the numeral 24 designates an electromagnetic first clutch; the numeral 25 designates a motor; the numeral 26 designates a wet type multiple disc second clutch; and the numeral 28 designates a generator.

Moreover, reference numeral 41 designates a drive unit casing, in which the first clutch 24, the motor 25 and the second clutch 26 are housed. The drive unit casing 41 can utilize the automatic transmission casing of the existing vehicle as it is. Numeral 42 designates righthand and lefthand rear wheels, to which is transmitted the rotation decelerated and differentiated by the DEF 23.

If the engine 21 and the motor 25 are connected connected in case they are different in the r.p.m., shocks are established by the engagement. The shocks at this engaging time are reduced by changing the first clutch 24 between the engine 21 and the motor 25 into an electromagnetic type to control the first clutch 24 electrically.

As a result, the first clutch 24 is composed of: a drive member 24a connected to an input shaft 45; and a driven member 24b connected to a transmission shaft 46 and is constructed to arrange electromagnetic powder between the two members 24a and 24b. If a clutch current to flow through the clutch oil of the aforementioned driven member 24b is adjusted, the electromagnetic powder aggregates in the gap between the drive member 24a and the driven member 24b to establish a coupling force.

On the other hand, the motor 25 is composed of: a stator 25a fixed in the drive unit casing 41; and a rotor 25b connected to the transmission shaft 46. The stator 25a is wound with a coil 25c so that it is enabled to rotate the rotor 25b by feeding a drive current to the coil 25c.

Moreover, the second clutch 26 is composed of wet type multiple discs, of which drive side multiple discs 26a and driven side multiple discs 26b can be selectively engaged or disengaged by a hydraulic servo. The aforementioned transmission shaft 46 is connected to the drive side multiple discs 26a, and a rotational shaft 47 is connected to the driven side multiple discs 26b.

In the vehicular motor system 20 thus constructed, the rotation of the engine 21 is transmitted through the input shaft 45 to the drive member 24a of the first clutch 24 to rotate the driven member 24b when the first clutch 24 is engaged. The rotation of the driven member 24b is transmitted through the transmission shaft 46 to the rotor 25b of the motor 25 and the drive side multiple discs 26a of the second clutch 26. When the second clutch 26 is engaged, the rotation having been transmitted to the drive side multiple discs 26a is transmitted from the rotational shaft 47 to the DEF 23 and is decelerated at a predetermined reduction ratio until it is transmitted to the righthand and left rear wheels 42.

In Fig. 5, on the other hand, the vehicular motor system 30 of the B type is mounted on the FR type vehicle. The numeral 21 designates an engine; the numeral 23 designates a DEF; the numeral 24 designates an electromagnetic type first clutch; the numeral 25 designates a motor; the numeral 28 designates a generator; and the numeral 29 designates a starter motor.

Moreover, the numeral 41 designates the drive unit casing, in which the aforementioned first clutch 24 and motor 25 are housed. The drive unit casing 41 can utilize the automatic transmission casing of the of the existing vehicle as it is. The reference numeral 42 designates the rear wheels, to which is transmitted the rotation decelerated and differentiated by the aforementioned DEF 23. The aforementioned first clutch 24 used is of an electromagnetic type.

This first clutch 24 is composed of the drive member 24a and the driven member 24b connected to an output shaft 50. The motor 25 is composed of the stator 25a fixed in the drive unit casing 41 and the rotor 25b connected to the output shaft 50. The stator 25a is wound with the coil 25c so that the rotor 25b can be rotated by feeding a drive current to the coil 25c.

In the vehicular motor system 30 thus constructed, the rotation of the engine 21 is transmitted through the input shaft 45 to the drive member 24a of the first clutch 24 to rotate the driven member 24b when the first clutch 24 is engaged. Moreover, the rotation of the driven member 24b is further transmitted through the output shaft 50 to the rotor 25b of the motor 25 and to the DEF 23 and is decelerated at a predetermined reduction rate until it is transmitted to the righthand and lefthand rear wheels 42.

Next, here will be described examples in which the vehicular motor systems 20 and 30 of the present invention are mounted on an FF type vehicle.

In the prior art, the FF type vehicle is classified into the transverse FF vehicle, in which the engine 21 is mounted to have its axis of rotation oriented transversely, and the longitudinal FF vehicle, in which the engine 21 is mounted to have its axis of rotation oriented longitudinally.

The transverse FF vehicle is further classified into a counter gear type, in which the rotation of the engine 21 is transmitted to the differential mechanism through a counter gear composed of a counter drive gear and a counter driven gear, and a chain type, in which the rotation of the engine 21 is transmitted to the differential mechanism through a chain. The counter gear type is further classified into an middle portion arranged type, in which the counter gear is disposed at a middle portion of an intermediate transmission shaft, and a rear portion arranged type, in which the counter gear is disposed at a rear portion of the intermediate transmission shaft.

The vehicular motor systems 20 and 30 of the present invention can be individually mounted without any substantial design change on those various vehicles.

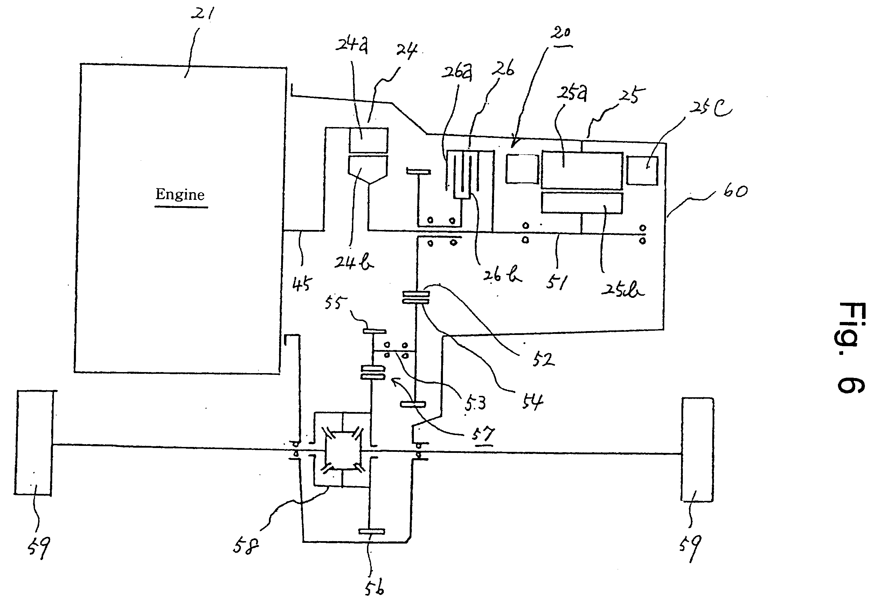

The structures having the counter gear disposed at a middle portion of the intermediate transmission shaft will be described with reference to Figs. 6 to 9.

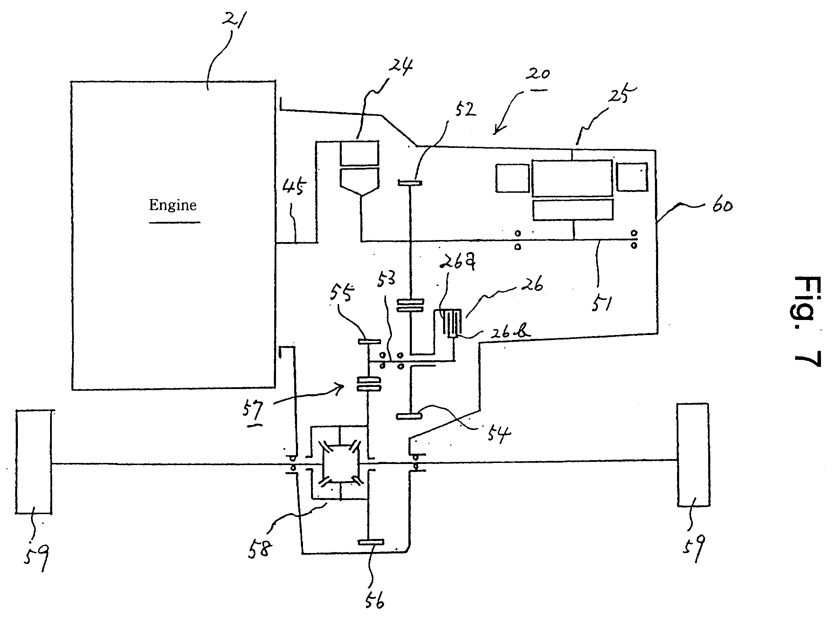

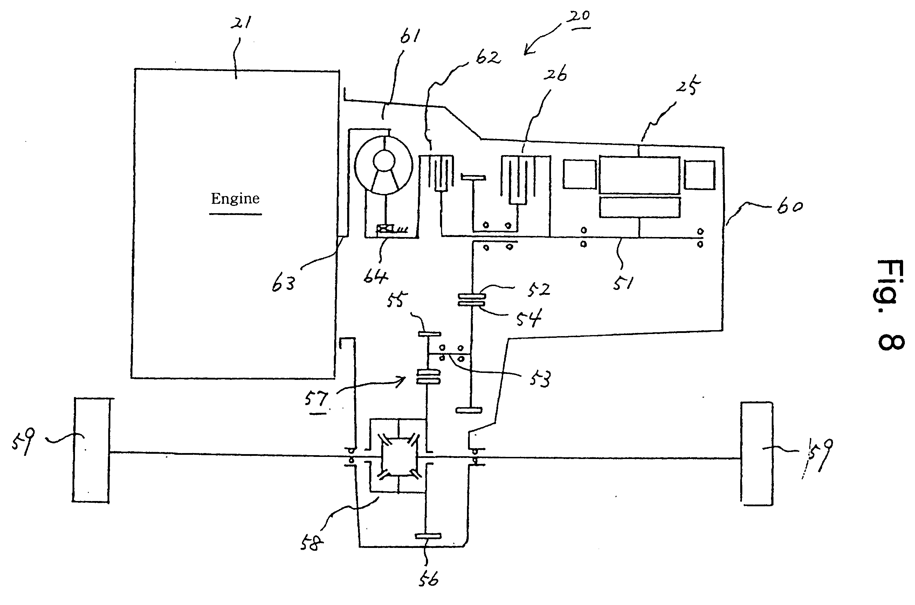

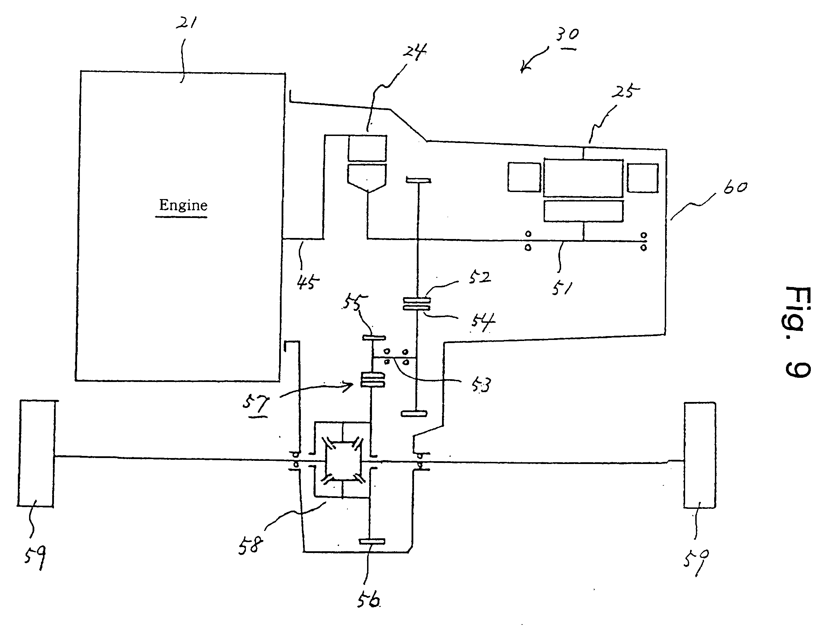

Fig. 6 is a diagram showing a first mounting example of the vehicular motor system which is mounted on the vehicle of the type with the counter gear being arranged in a middle portion; Fig. 7 is a diagram showing a second mounting example of the vehicular motor system which is mounted on the vehicle of the type with the counter gear being arranged in a middle portion; Fig. 8 is a diagram showing a third mounting example of the vehicular motor system which is mounted on the vehicle of the type with the counter gear being arranged in a middle portion; and Fig. 9 is a diagram showing a fourth mounting example of the vehicular motor system which is mounted on the vehicle of the type with the counter gear being arranged in a middle portion. In Fig. 6, the vehicular motor system 20 of the A type is connected to the engine 21 of a transverse FF vehicle. The numeral 24 designates a first clutch composed of a drive member 24a and a driven member 24b; the numeral 25 designates a motor composed of a stator 25a, a rotor 25b and a coil 25c; and the numeral 26 designates a second clutch composed of a drive side multiple discs 26a and a driven side multiple discs 26b.

The rotation of the engine 21 is transmitted through the input shaft 45 to the first clutch 24. The driven member 24b of the first clutch 21 is connected through an intermediate transmission shaft 51 to the drive side multiple discs 26a of the second clutch 26 and the rotor 25b of the motor 25. Moreover, the rotation of the engine 21 or the motor 25 is transmitted to a counter drive gear 52 which encloses the intermediate transmission shaft 51 and is connected to the driven side multiple discs 26b.

A counter drive shaft 53 is arranged in parallel with the intermediate transmission shaft 51, and a counter driven shaft 54 is fixed on the counter drive shaft 53. The counter driven gear 54 is in meshing engagement with the counter drive gear 52 to transmit the rotation of the counter drive gear 52 to an output gear 55.

Moreover, the rotation of the output gear 55 is transmitted to a larger output gear 56 meshing with the output gear 55. The larger output gear 56 is given a larger tooth number than that of the output gear 55, and these gears 55 and 56 constitute together a final reduction gear mechanism 57. The rotation of the larger output gear 56 thus reduced by the final reduction gear mechanism 57 is transmitted to and differentiated by a differential mechanism 58 until it is transmitted to righthand and lefthand front wheels 59.

Reference numeral 60 designates a drive unit casing for housing the first clutch 24, the motor 25, the second clutch 26, the final reduction gear mechanism 57 and the differential mechanism 58 and can utilize the automatic transmission casing of the existing vehicle as it is.

In the vehicular motor system 20 thus constructed, the counter drive gear 52 is arranged at a middle portion of the intermediate transmission shaft 51. As a result, only the motor 25 and the second clutch 26 are arranged at the back of the counter drive gear 52 so that the back space can be sufficiently utilized to increase the capacity of the motor 25. In other words, the axial size of the motor 25 can be enlarged to increase the torque to be generated. Moreover, the radial size of the motor 25 can be enlarged to increase the attraction of the rotor 25b by the stator 25a.

In Fig. 7, the vehicular motor system 20 of the A type is connected to the engine 21 of the transverse FF vehicle. The counter drive gear 52 is fixed directly on the intermediate transmission shaft 51, and the second clutch 26 is arranged between the counter driven gear 54 and the counter drive shaft 53. In other words, the counter driven gear 54 and the drive side multiple discs 26 are connected to each other, and the counter drive shaft 53 and the drive side multiple discs 26b are connected to each other.

With the structure thus made, the design of the first shaft, i.e., the input shaft 45 and the intermediate transmission shaft 51 can be facilitated by removing the second clutch 26 from above the first shaft and moving it to over the second shaft, i.e., the counter drive shaft 53.

In Fig. 8, the vehicular motor system 20 of the A type is connected to the engine 21 of the transverse FF vehicle. Reference numeral 61 designates a fluid coupling unit such as a torque converter to be run by the rotation of the engine 21; numeral 62 designates a first clutch for transmitting the rotation of the fluid coupling unit 61 to the intermediate transmission shaft 51; and the numeral 26 designates a second clutch for transmitting the rotation of the intermediate transmission shaft 51 to the counter drive gear 52. Both the first clutch 62 and the second clutch 26 as used are of wet multiple disc type.

Numeral 63 designates an engine output shaft for transmitting the rotation of the engine 21 to the fluid coupling unit 61, and numeral 64 designates an input shaft for transmitting the rotation of the fluid coupling unit 61 to the intermediate transmission shaft 51.

The fluid coupling unit 61 is caused to function as a transmission which is continuous on principle, by moving a working fluid between a pump impeller and a turbine runner. In case the battery is discharged or the motor 25 is troubled, the vehicle can be started and run by running the engine 21 only to transmit the torque through the fluid coupling unit 61 to the front wheels 59.

If, on the other hand, the first clutch 62 is engaged when there is a difference in the r.p.m. between the engine 21 and the motor 25, the difference can be absorbed by the fluid coupling unit 61. This makes it unnecessary to utilize an electromagnetic one as the first clutch 62.

In Fig. 9, the vehicular motor system 30 of the B type is connected to the engine 21 of the transverse FF vehicle. The numeral 24 designates an electromagnetic first clutch; the numeral 25 designates a motor; the numeral 45 designates an input shaft; and the numeral 51 designates an intermediate transmission shaft.

In this case, the counter drive gear 52 is fixed on the intermediate transmission shaft 51 and is in meshing engagement with the counter driven gear 54 which fixed on the counter drive shaft 53 arranged in parallel with the intermediate transmission shaft 51. Moreover, the rotation of the counter driven gear 54 is transmitted to and reduced by the final reduction gear mechanism 57 until it is transmitted to the differential mechanism 58.

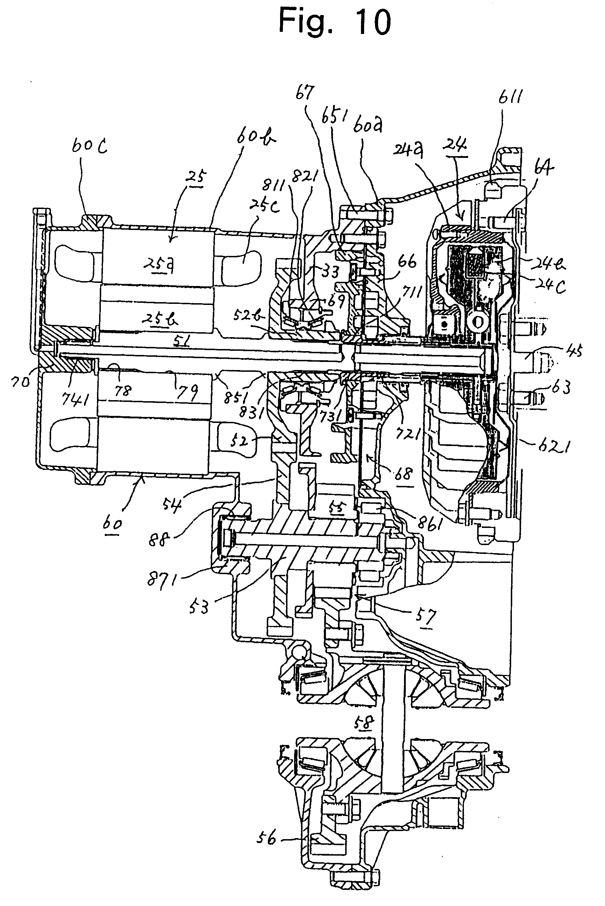

Fig. 10 is a section showing the vehicular motor system according to the first embodiment of Fig. 9.

In Fig. 10, the numeral 24 designates a clutch composed of a drive member 24a and a driven member 24b, and the numeral 25 designates a motor composed of a stator 25a, a rotor 25b and a coil 25c.

The clutch 24 is of an electromagnetic type and is interposed between the input shaft 45 and the intermediate transmission shaft 51. On the outer circumference of the clutch 24, there is fixed a ring gear 61 for transmitting the rotation when the engine 21 is to be started. A drive plate 621 is fixed to the input shaft 45 by means of bolts 63, and the driven member 24a is fixed on the drive plate 621 by means of bolts 64.

On the other hand, the driven member 24b has the coil 24c therein and has its core splined to the intermediate transmission shaft 51 so that its rotation can be transmitted to the intermediate transmission shaft 51 through the electromagnetic power which is fitted between the drive member 24a and the driven member 24b. Specifically, if the clutch current to flow through the clutch coil of the driven member 24b is adjusted, the electromagnetic powder aggregates in the gap between the drive member 24a and the driven member 24b to establish a coupling force.

If the engine 21 and the motor 25 are connected to each other through the clutch 24 if they have a difference in the r.p.m., shocks are caused by the engagement. Since, however, the clutch 24 is of the electromagnetic type, the shocks at the time of engagement can be reduced by controlling the clutch 24 electrically.

On the other hand, the motor 25 is composed of a stator 25a fixed in the drive unit casing 60 and a rotor 25b connected to the intermediate transmission shaft 51. The stator 25a is wound with the coil 25c so that the rotor 25b can be rotated by feeding the drive current to the coil 25c.

The rotation of the engine 21 is transmitted through the input shaft 45 to the clutch 24. The driven member 24b of the clutch 24 is connected through the intermediate transmission shaft 51 to the rotor 25b of the motor 25. Moreover, the rotation of the engine 21 or the motor 25 is transmitted to the counter drive gear 52 which is fixed on the intermediate transmission shaft 51.

In parallel with the intermediate transmission shaft 51, there is arranged the counter drive shaft 53, which is equipped with the counter driven gear 54. This counter driven gear 54 is in meshing engagement with the counter drive gear 52 so that the rotation of the counter drive gear 52 is transmitted to the output gear 55.

Moreover, the rotation of this output gear 55 is transmitted to the larger output gear 56 meshing with the output gear 55. The larger output gear 56 is given a larger tooth number than that of the output gear 55, and these two gears 55 and 56 constitute together the final reduction gear mechanism 57. The rotation of the larger output gear 56 thus reduced by the final reduction gear mechanism 57 is transmitted to and differentiated by the differential mechanism 58 until it is transmitted to the righthand and lefthand front wheels 59.

The reference numeral 60 designates a drive unit casing for housing the clutch 24, the motor 25, the final reduction gear mechanism 57 and the differential mechanism 58 and can utilize the automatic transmission casing of the existing vehicle as it is.

The drive unit casing 60 is composed of a clutch casing 60a, a center casing 60b and a rear cover 60c, of which the clutch casing 60a is connected to the center casing 60b by means of bolts 651 whereas the rear cover 60c is connected to the center casing 60b by the faucet joint. To the front end portion of the rear cover 60b, there is fixed an oil pump body 66, to which an oil pump cover 67 is fixed. These oil pump body 66 and oil pump cover 67 form together a partition 68. The oil for cooling the motor 25 is reserved in the space which is defined by the partition 68, the center casing 60b and the rear cover 60c. Moreover, this rear cover 60c is formed at its center with a rear support 70 which is directed forward.

In the inner circumference of the aforementioned oil pump body 66 and oil pump cover 67, there is fixed a cylindrical sleeve 711. Between this sleeve 711 and the intermediate transmission shaft 51, there are arranged bushes 721 and 731 for supporting one end of the intermediate transmission shaft 51 rotatably. On the other hand, the aforementioned rear support 70 is formed with an opening directed forward, in which the other end of the intermediate transmission shaft 51 is fitted such that it is rotatably supported by a roller bearing 741.

The rotor 25b of the aforementioned motor 25 is fixed relative to the intermediate transmission shaft 51 thus supported. For this, the surface of the intermediate transmission shaft 51 corresponding to the rotor 25b is formed with a spline 78 and a centering portion 79 so that the rotation of the rotor 25b can be transmitted to the intermediate transmission shaft 51.

On the other hand, the aforementioned counter drive gear 52 is formed at its axial side with a sleeve portion 52b, which is supported from the outside through tapered roller bearings 811 and 821 by a center support 69 formed in an intermediate support wall 33. The portion of the intermediate transmission shaft 51 corresponding to the sleeve portion 52b is formed with a trapezoidal spline 831 so that the rotation of the intermediate transmission shaft 51 can be transmitted to the aforementioned counter drive gear 52. Here, if the fitting of the spline 831 between the intermediate transmission shaft 51 and the sleeve portion 52b is tight and if the spline accuracy is poor, the intermediate transmission shaft 51 is made eccentric by the centering operation to some extent at the meshing time. Thus, the intermediate transmission shaft 51 and the sleeve portion 52b are loosely fitted.

Incidentally, reference numeral 851 designates a stopper for positioning the aforementioned rotor 25b and sleeve portion 52b.

On the other hand, the aforementioned counter drive shaft 53 has its one end supported through a bearing 861 in an opening formed in the clutch casing 60a and its other end supported through a roller bearing 88 on a rear support 871 formed at the center casing 60b.

In the vehicular motor system 30 thus constructed, the counter drive gear 52 is arranged at the middle portion of the intermediate transmission shaft 51. As a result, only the motor 25 is arranged at the back of the counter drive gear 52 so that the back space can be sufficiently utilized to increase the capacity of the motor 25. Specifically, the motor 25 can have its axial size enlarged to increase the torque to be generated thereby. Moreover, the motor 25 can have its radial size enlarged to increase the attraction of the rotor 25b by the stator 25a.

As has been described above, on the other hand, the intermediate transmission shaft 51 is supported through the bushes 721 and 731 by the partition 68, through the roller bearing 741 by the rear cover 60c and further at two points by the drive unit casing 60 so that the centering accuracy of the intermediate transmission shaft 51 can be enhanced. As a result, no interference is caused between the stator 25a and the rotor 25b, even if their gap is narrowed, so that the output of the motor 25 can be increased.

Since, moreover, the counter drive gear 52 is positioned at the middle portion of the intermediate transmission shaft 51, the motor 25 can be accessed to merely by removing the rear cover 60c thereby to facilitate the maintenance and/or administration.

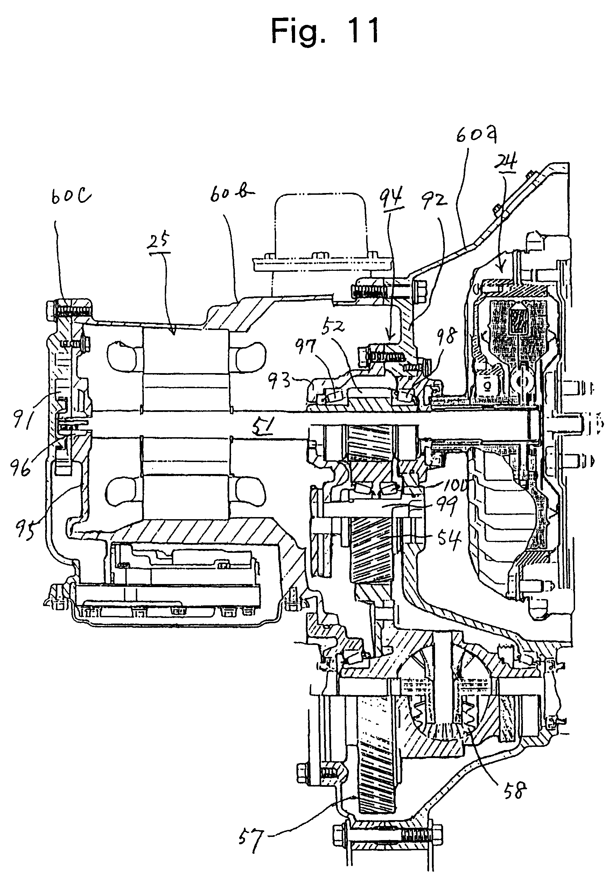

Fig. 11 is a section showing a vehicular motor system according to a second embodiment of Fig. 9.

In Fig. 11: the numeral 60a designates a clutch casing for housing the clutch 24; the numeral 60b designates a center casing; and the numeral 60c designates a rear cover constituting an oil pump 91. Both the clutch casing 60a and the rear cover 60c are fixed on the center casing 60b by means of bolts. The clutch casing 60a is integrally formed at its back with a front support 92, on which is fixed a gear cover 93 by means of bolts. The front support 92 and the gear cover 93 constitute together a partition 94. On the other hand, the center casing 60b is formed at its rear end with a rear support 95.

The intermediate transmission shaft 51 has its rear end supported by a bush 96 and its front end supported by bearings 97 and 98. Of these, the bearing 97 is arranged in the gear cover 93 whereas the bearing 98 is arranged in the front support 92 to support the intermediate transmission shaft 51 from the outside through the counter drive gear 52.

Between the clutch casing 60a and the gear cover 93, on the other hand, there is arranged a shaft 99 for supporting the counter driven gear 54 from the inside through a bearing 100.

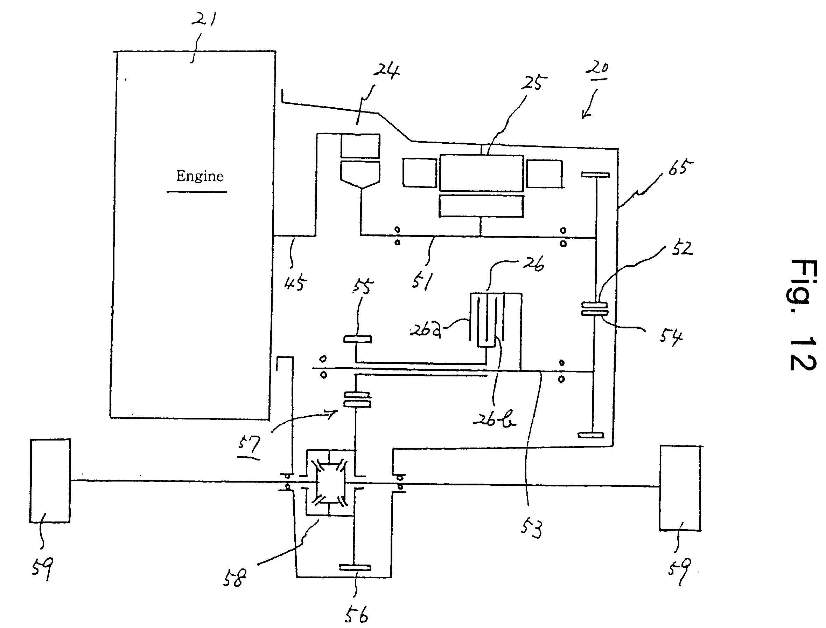

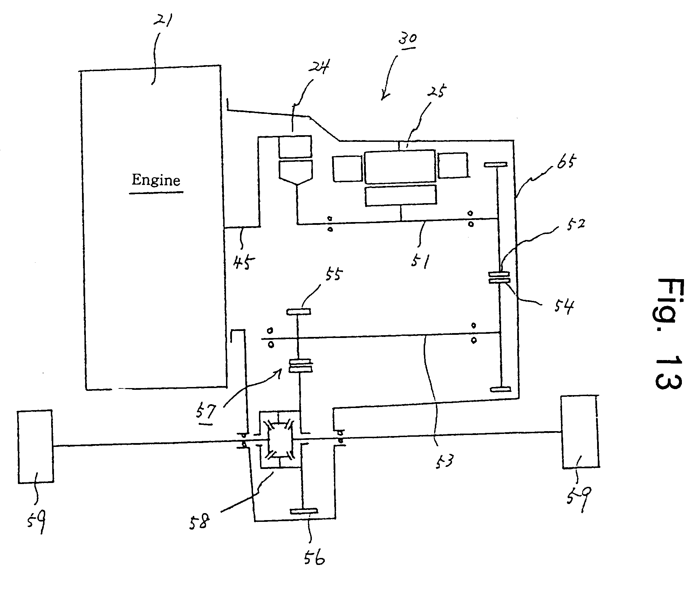

Next, the structure having the counter gear disposed at the rear portion of the intermediate transmission shaft 51 will be described with reference to Figs. 12 and 13.

Fig. 12 is a diagram showing a first mounting example of a vehicular motor system which is mounted on a vehicle having a counter gear arranged at a rear portion, and Fig. 13 is a diagram showing a second mounting example of a vehicular motor system which is mounted on a vehicle having a counter gear arranged at a rear portion.

In Fig. 12, the vehicular motor system 20 of the A type is connected to the engine 21 of the transverse FF vehicle. The numeral 24 designates a first clutch; the numeral 25 designates a motor; the numeral 45 designates an input shaft; and the numeral 51 designates an intermediate transmission shaft. In this case, the intermediate transmission shaft 51 is arranged at its rear portion with the counter drive gear 52. The numeral 53 designates a counter drive shaft which is arranged in parallel with the intermediate transmission shaft 51. The counter drive shaft 53 is arranged at its back with the counter driven gear 54 which is in meshing engagement with the counter drive gear 52.

Moreover, the counter drive shaft 53 is arranged with the output gear 55 which is made rotatable relative to the former. The second clutch 26 is arranged between the counter drive shaft 53 and the output gear 55. Specifically, the counter drive shaft 53 and the drive side multiple discs 26a of the second clutch 26 are connected to each other, and the output gear 55 and the driven side multiple discs 26b are connected to each other. The numeral 56 designates a larger output gear which is in meshing engagement with the output gear 55, and these gears 55 and 56 constitute together a final reduction gear mechanism 57.

Reference numeral 65 designates a drive unit casing for housing the first clutch 24, the motor 25, the second clutch 26, the final reduction gear mechanism 57 and the differential mechanism 58.

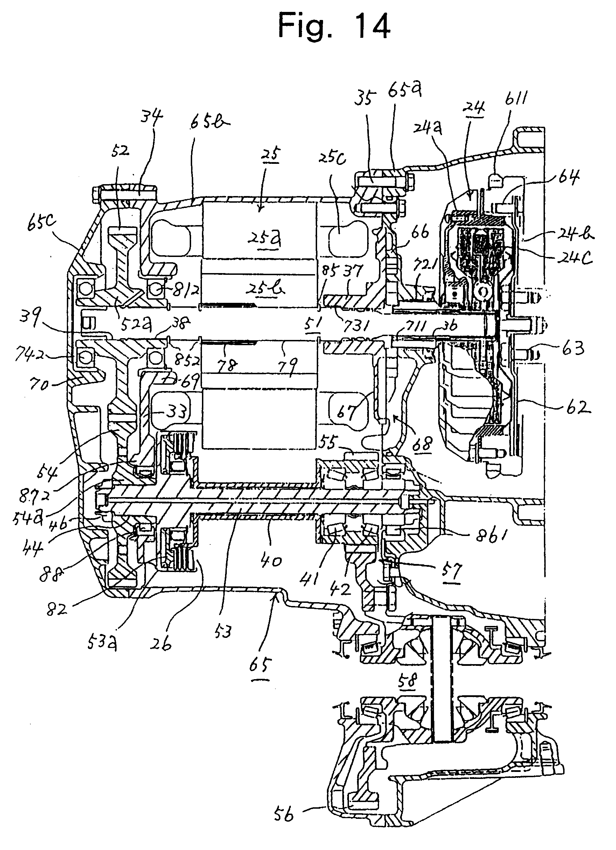

Fig. 14 is a section showing the vehicular motor system of Fig. 13.

In Fig. 14, the numeral 24 designates a first clutch composed of a drive member 24a and a driven member 24b, and the numeral 25 designates a motor composed of a stator 25a, a rotor 25b and a coil 25c.

The first clutch 24 is of the electromagnetic type and is interposed between the input shaft 45 aNd the intermediate transmission shaft 51. On the outer circumference of the first clutch 24, there is fixed a ring gear 611 for transmitting the rotation when the engine 21 is to be started. A drive plate 621 is fixed on the input shaft 45 by means of the bolts 63, and the drive member 24a is fixed on the drive plate 621 by means of the bolts 64.

On the other hand, the driven member 24b is equipped therein with a coil 24c and has its core splined to the intermediate transmission shaft 51 so that the rotation of the driven member 24b can be transmitted to the intermediate transmission shaft 51 through the electromagnetic powder which is arranged between the drive member 24a and the driven member 24b. Specifically, if the clutch current to flow through the clutch coil of the driven member 24b is adjusted, the electromagnetic powder aggregates in the gap between the drive member 24a and the driven member 24b to establish a coupling force.

If the engine 21 and the motor 25 are connected by the first clutch if they are difference in the r.p.m., their engagement will cause shocks. However, these shocks can be reduced by controlling the first clutch 24 electrically because the first clutch 24 is of the electromagnetic type.

On the other hand, the motor 25 is composed of a stator 25a fixed in the drive unit casing 65 and a rotor 25b connected to the intermediate transmission shaft 51. The stator 25a is wound with the coil 25c so that the rotor 25b can be rotated by feeding the drive current to the coil 25c.

The rotation of the engine 21 is transmitted through the input shaft 45 to the first clutch 24. The driven member 24b of the first clutch 24 is connected through the intermediate transmission shaft 51 to the rotor 25b of the motor 25. Moreover, the rotation of the engine 21 or the motor 25 is transmitted to the counter drive gear 52 which is fixed on the intermediate transmission shaft 51.

In parallel with the intermediate transmission shaft 51, there is arranged the counter drive shaft 53 which is equipped with the counter driven gear 54. This counter driven gear 54 is in meshing engagement with the counter drive gear 52 to transmit the rotation of the counter drive gear 52 to the output gear 55.

Moreover, the rotation of this output gear 55 is transmitted to the larger output gear 56 meshing with the output gear 55. The larger output gear 56 has a larger tooth number than that of the output gear 55, and these gears 55 and 56 constitute together the final reduction gear mechanism 57. The rotation of the larger output gear 56 thus reduced by the final reduction gear mechanism 57 is transmitted to the differential mechanism 58.

The reference numeral 65 designates a drive unit casing for housing the first clutch 24, the motor 25, the final reduction gear mechanism 57 and the differential mechanism 58 and can utilize the automatic transmission casing of the existing vehicle as it is.

The drive unit casing 65 is composed of a clutch casing 65a, a center casing 65b and a rear cover 65c, of which the clutch casing 65a is connected to the center casing 65b through bolts 35 and not-shown knock pins whereas the rear cover 65c is connected to the center casing 65b through bolts 34 and not-shown knock pins. To the front end portion of the center casing 65b, there is fixed the oil pump body 66, on which in turn is fixed the oil pump cover 67. These oil pump body 66 and oil pump cover 67 constitute together the partition 68. These partition 68, center casing 65b and rear cover 65c define altogether a space, which is reserved with the oil for cooling the aforementioned motor 25. Moreover, the aforementioned center casing 65b is formed, at its rear end position facing the rear cover 65c, with the intermediate support wall 22, which in turn is formed, at its core facing the intermediate transmission shaft 51, with an axially extending first center port 69. The aforementioned rear cover 65c is formed at its center with the rear support 70 oriented forward.

In the inner circumference of the aforementioned oil pump body 66, there is rotatably supported through the bush 721 the cylindrical sleeve 711 which is connected to the driven member 24b of the aforementioned first clutch 24. Moreover, the intermediate transmission shaft 51 is rotatably supported in the inner circumference of the sleeve 711 through the bush 36.

On the other hand, the aforementioned oil pump cover 67 is equipped with a front support 37 projecting backward from the core, and a bush 731 is arranged between the front support 37 and the intermediate transmission shaft 51 to support this shaft 51 rotatably.

On the other hand, the intermediate transmission shaft 51 is formed on the outer circumference of its rear end with a trapezoidal spline 38 and a centering portion 39 and is splined to the boss 52a of the aforementioned counter drive gear 52 so that its rotation can be transmitted to the counter drive gear 52. Moreover, the intermediate transmission shaft 51 is loosely fitted on the boss 52a and supported by the aforementioned centering portion 39, and the boss 52a has its outer circumference supported rotatably through a ball bearing 742 by the rear support and through a ball bearing 812 on the first center support 69 from the outside.

The aforementioned motor 25 has its rotor 25b fixed with respect to the intermediate transmission shaft 51 thus supported. As a result, the surface of the intermediate transmission shaft 51 corresponding to the rotor 25b is formed with the spline 78 and the centering portion 79 so that the rotation of the rotor 25b can be transmitted to the intermediate transmission shaft 51.

Here, if the fitting of the spline 38 between the intermediate transmission shaft 51 and the spline 38 is tight and if the spline accuracy is poor, the intermediate transmission shaft 51 is made eccentric by the centering operation to some extent at the meshing time. Thus, the intermediate transmission shaft 51 and the boss 52a are loosely fitted.

Incidentally, reference numeral 852 designates a snap ring for positioning the aforementioned rotor 25b and boss 52a.

On the other hand, the aforementioned counter drive shaft 53 has its one end supported through the bearing 861 in the opening which is formed in the aforementioned clutch casing 65a. The other end of the counter drive shaft 53 is splined by the spline 44 which has a small gap from the boss 54a of the counter driven gear 54. The boss 54a is supported through the roller bearing 88 by a second center support 872 which is formed in the aforementioned intermediate support wall 33.

The counter drive shaft 53 is integrally formed with a projecting clutch cylinder 53a of the second clutch 26, in which an annular piston 82 is slidably arranged. If the clutch cylinder 53a is fed therein with the oil, the annular piston 82 is moved to engage the second clutch 26. At this time, the rotation of the counter drive shaft 53 is transmitted to the output gear 55 through the sleeve 40 which is arranged on the outer circumference of the counter drive shaft 53.

The counter driven gear 54 is fixed on the counter drive shaft 53 by bringing one end of the aforementioned boss 54a into abutment against the rising portion of the clutch cylinder 53 and by fastening the other end of the boss 54a by means of the nut 46.

The tapered roller bearings 41 and 42 are arranged between the counter drive shaft 53 and the output gear 55 and supported rotatably relative to each other.

Since the intermediate transmission shaft 51 is supported by the partition 68 through the bushes 36, 721 and 731 and by the rear cover 65c and the center casing 65b through the ball bearings 742 and 812, as described above, its centering accuracy can be enhanced. As a result, the stator 25a and the rotor 25b can be freed from any interference, even their gap is narrowed, to increase the output of the motor 25.

In the vehicular motor system 20 of the A type thus constructed, the rotation of the engine 21 is transmitted through the input shaft 45 to the drive member 24a of the first clutch 24 to rotate the driven member 24b when the first clutch 24 is engaged. The rotation of the driven member 24b is further transmitted through the intermediate transmission shaft 51 to the rotor 25b of the motor 25 and the counter drive gear 52. Moreover, the rotation thus transmitted to the counter drive gear 52 is transmitted through the counter driven gear 54 and the output gear 55 to the larger output gear 56 so that it is decelerated at a predetermined reduction ratio until it is transmitted to the righthand and lefthand front wheels 59.

In Fig. 13, the vehicular motor system 30 of the B type is connected to the engine 21 of the transverse FF vehicle. In this case, the second clutch is not provided so that the output shaft 55 is fixed directly to the counter drive shaft 53.

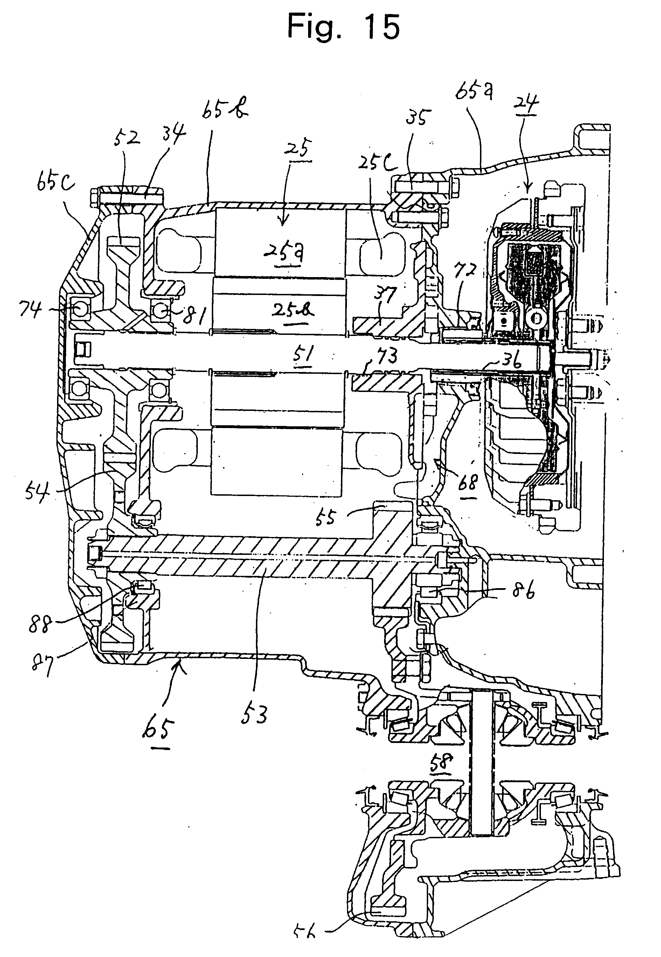

Fig. 15 is a section showing the vehicular motor system according to the second embodiment shown in Fig. 13.

In Fig. 15: the numeral 65a designates a clutch casing for housing the first clutch 24; the numeral 65b designates a center casing for housing the motor 25 and the output gear 55; and the numeral 65c designates a rear cover for housing the counter drive gear 52 and the counter driven gear 54.

In this embodiment, the counter drive shaft 53 and the output gear 55 are integrally formed so that the rotation transmitted to the counter driven gear 54 is transmitted as it is through the counter drive shaft 53 to the output gear 55.

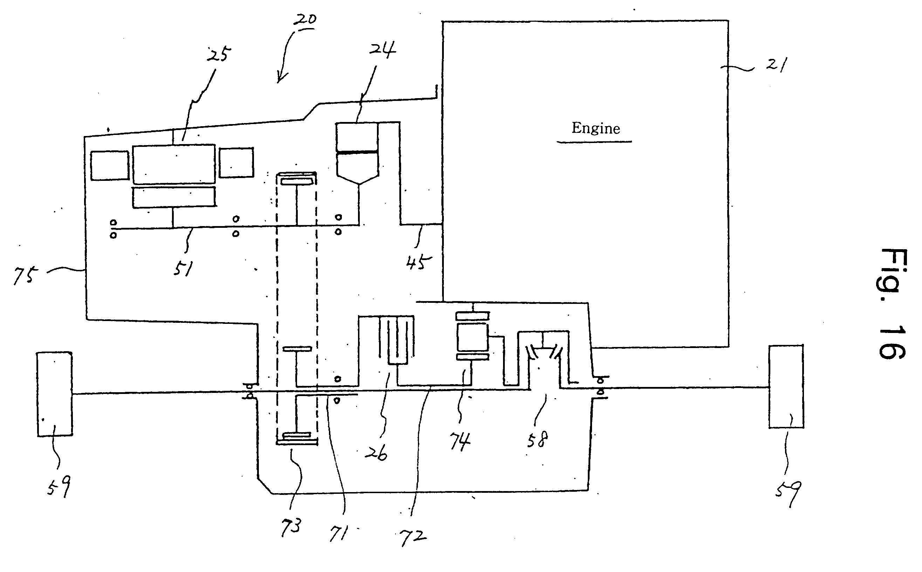

Subsequently, the structures, in which the vehicular motor systems 20 and 30 are mounted on the chain type vehicle for transmitting the rotation of the engine 21 through the chain to the differential mechanism 58, will be described with reference to Figs. 16 to 19.

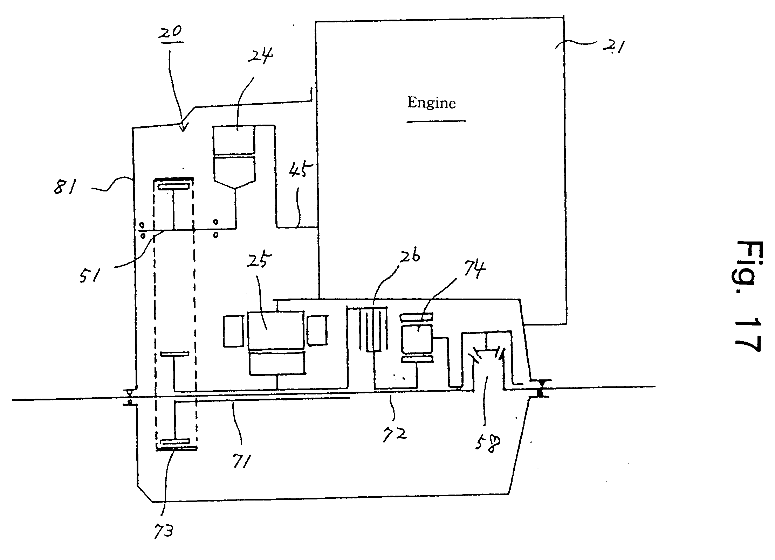

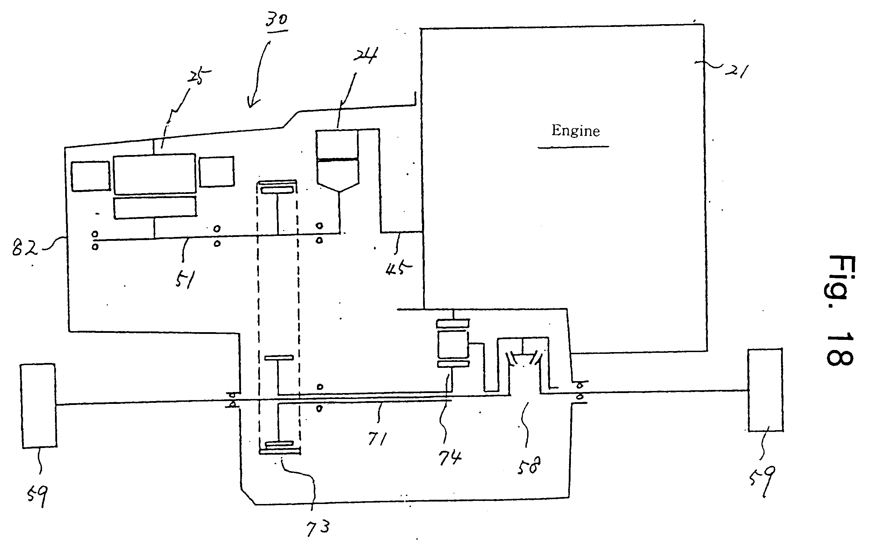

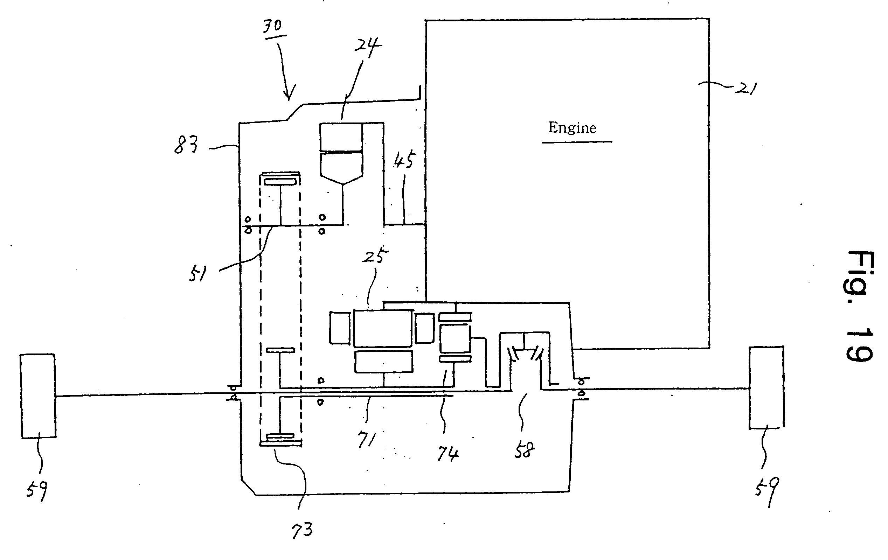

Fig. 16 is a diagram showing a first mounting example of the vehicular motor system which is mounted on the chain type vehicle; Fig. 17 is a diagram showing a second mounting example of the vehicular motor system which is mounted on the chain type vehicle; Fig. 18 is a diagram showing a third mounting example of the vehicular motor system which is mounted on the chain type vehicle; and Fig. 19 is a diagram showing a third mounting example of the vehicular motor system which is mounted on the chain type vehicle.

In Fig. 16, the vehicular motor system 20 of the A type is connected to the engine 21 of the transverse FF vehicle. The numeral 24 designates a first clutch; the numeral 25 designates a motor; the numeral 45 designates an input shaft; and the numeral 51 designates an intermediate transmission shaft.

A driven side transmission shaft 71 and an output shaft 72 are arranged in parallel with the intermediate transmission shaft 51, and a chain mechanism 73 composed of a sprocket and a chain is arranged between the intermediate transmission shaft 51 and the driven side transmission shaft 71. Thus, the torque generated by the engine 21 or the motor 25 is transmitted through the chain mechanism 73 to the driven side transmission shaft 71. Moreover, the second clutch 26 is arranged between the driven side transmission shaft 71 and the output shaft 72.

To the output side of the output shaft 72, on the other hand, there is connected a final reduction gear mechanism 74 so that the rotation decelerated by the final reduction gear mechanism 74 is transmitted to the differential mechanism 58. Reference numeral 75 designates a drive unit casing for housing the first clutch 24, the motor 25, the chain mechanism 73, the second clutch 26, the final reduction gear mechanism 74 and the differential mechanism 58.

In Fig. 17, the vehicular motor system 20 of the A type is connected to the engine 21 of the transverse FF vehicle. The numeral 24 designates a first clutch; the numeral 45 designates an input shaft; the numeral 51 designates an intermediate transmission shaft; and numeral 81 designates a drive unit casing. The driven side transmission shaft 71 and the output shaft 72 are arranged in parallel with the intermediate transmission shaft 51, and the chain mechanism 73 is arranged between the intermediate transmission shaft 51 and the driven side transmission shaft 71, so that the torque generated by the engine 21 is transmitted through the chain mechanism 73 to the driven side transmission shaft 71. Moreover, the motor 25 is connected to the driven side transmission shaft 71, and the second clutch 26 is arranged between the driven side transmission shaft 71 and the aforementioned output shaft 72.

On the other hand, the final reduction gear mechanism 74 is connected to the output side of the output shaft 72 so that the rotation decelerated by it self is transmitted to the differential mechanism 58.

In this case, the motor 25 cannot be arranged on the intermediate transmission shaft 51 because the sizes of the input shaft 45 and the intermediate transmission shaft 51 are limited. Thus, the motor 25, the second clutch 26, the final reduction gear mechanism 74 and the differential mechanism 58 are arranged below the engine 21.

In Fig. 18, the vehicular motor system 30 of the B type is connected to the engine 21 of the transverse FF vehicle. The numeral 24 designates a first clutch; the numeral 25 designates a motor; the numeral 45 designates an input shaft; the numeral 51 designates an intermediate transmission shaft; and the numeral 81 designates a drive unit casing. The chain mechanism 73 is arranged between the intermediate transmission shaft 51 and the driven side transmission shaft 71.

The final reduction gear mechanism 74 is connected directly to the driven side transmission shaft 71 so that the rotation decelerated by it self is transmitted to the differential mechanism 58.

In Fig. 19, the vehicular motor system 30 of the B type is connected to the engine 21 of the transverse FF vehicle. In this case, the motor 25 is connected to the driven side transmission shaft 71 so that either the torque transmitted through the chain mechanism 73 or the torque generated by the motor 25 is transmitted to the final reduction gear mechanism 74. Incidentally, reference numeral 83 designates a drive unit casing.

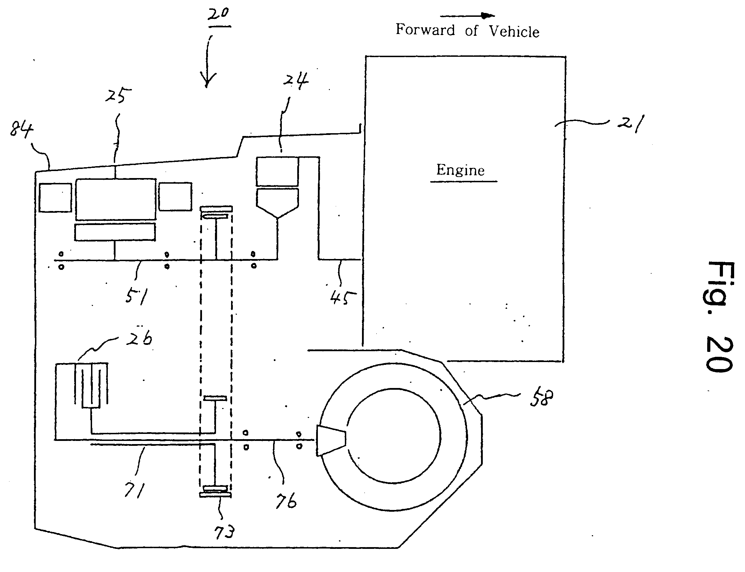

Next, the structures, in which the vehicular motor systems 20 and 30 are mounted on the longitudinal FF vehicle having its engine 21 mounted to have a longitudinal axis, will be described with reference to Figs. 20 to 23.

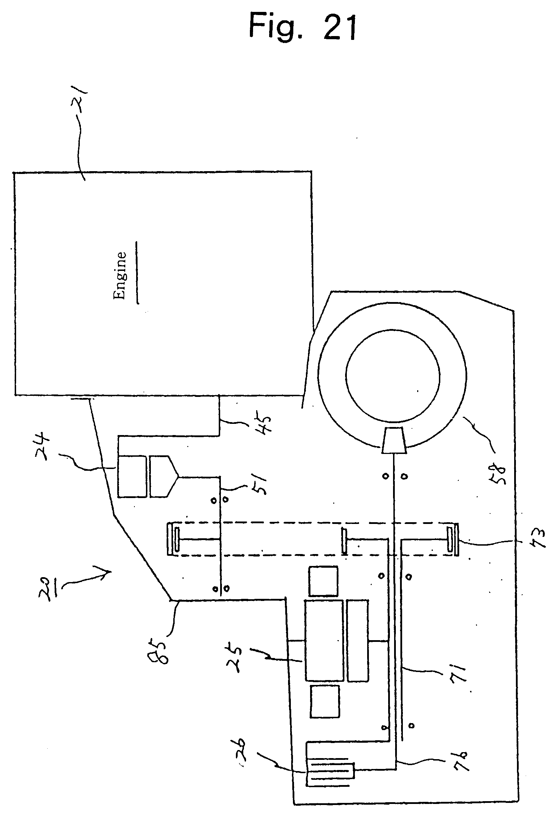

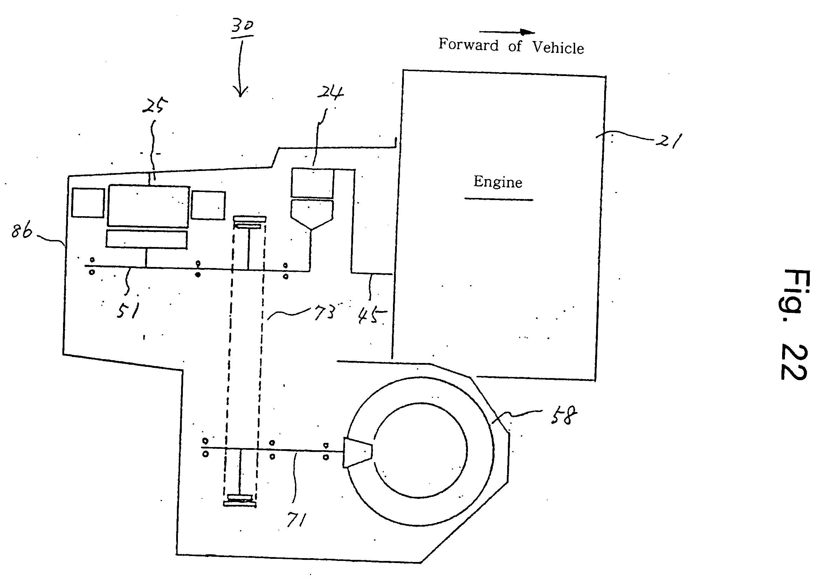

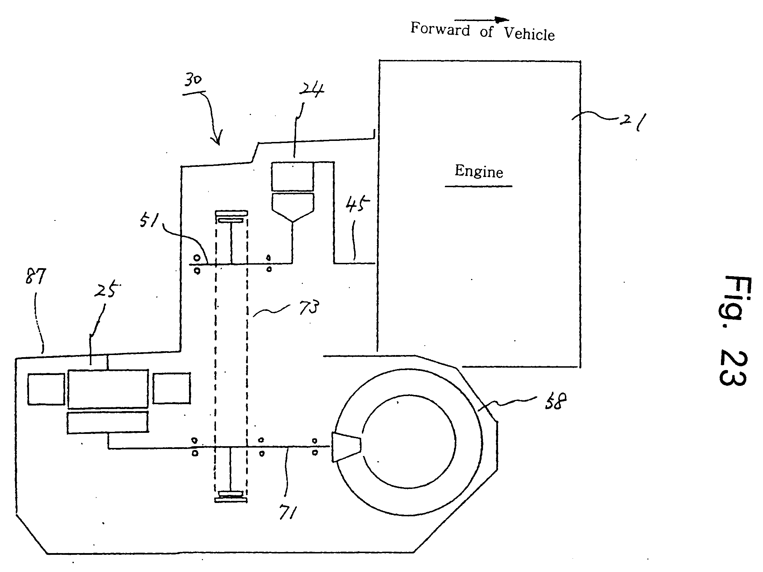

Fig. 20 is a diagram showing a first mounting example of the vehicular motor system which is mounted on a longitudinal FF vehicle; Fig. 21 is a diagram showing a second mounting example of the vehicular motor system which is mounted on a longitudinal FF vehicle; Fig. 22 is a diagram showing a third mounting example of the vehicular motor system which is mounted on a longitudinal FF vehicle; and Fig. 23 is a diagram showing a fourth mounting example of the vehicular motor system which is mounted on a longitudinal FF vehicle. The individual righthand sides of these Figures correspond to the forward direction of the vehicle so that the righthand and lefthand front wheels are arranged on the surface and back of each of the drawing sheet.

In Fig. 20, the vehicular motor system 20 of the A type is connected to the engine 21 of the longitudinal FF vehicle. The numeral 24 designates a first clutch; the numeral 25 designates a motor; the numeral 45 designates an input shaft; the numeral 51 designates an intermediate transmission shaft; and numeral 84 designates a drive unit casing. The driven side transmission shaft 71 is arranged in parallel with the intermediate transmission shaft 51 so that the rotation of the intermediate transmission shaft 51 can be transmitted through the chain mechanism 73 to the driven side transmission shaft 71.

An output shaft 76 is so arranged in the driven side transmission shaft 71 that it can rotate relative to the transmission shaft 71. These shafts 71 and 76 are connected by the second clutch 26. The differential mechanism 58 is arranged at the output side of the output shaft 76.

In Fig. 21, the vehicular motor system 20 of the A type is connected to the engine 21 of the longitudinal FF vehicle. In this case, the motor 25 is arranged over the driven side transmission shaft 71. Incidentally, reference numeral 85 designates a drive unit casing.

In Fig. 22, the vehicular motor system 30 of the B type is connected to the engine 21 of the longitudinal FF vehicle. The numeral 24 designates a first clutch; the numeral 25 designates a motor; the numeral 45 designates an input shaft; the numeral 51 designates an intermediate transmission shaft; and numeral 86 designates a drive unit casing. The driven side transmission shaft 71 is arranged in parallel with the intermediate transmission shaft 51 so that the rotation of the intermediate transmission shaft 51 can be transmitted through the chain mechanism 73 to the driven side transmission shaft 71.

The differential mechanism 58 is connected to the output side of the driven side transmission shaft 71 so that the rotation transmitted through the aforementioned chain mechanism 73 to the driven side transmission shaft 71 is transmitted directly to the differential mechanism 58.

In Fig. 23, the vehicular motor system 30 of the B type is connected to the engine 21 of the longitudinal FF vehicle. The numeral 24 designates a first clutch; the numeral 45 designates an input shaft; the numeral 51 designates an intermediate transmission shaft; and numeral 87 designates a drive unit casing. The driven side transmission shaft 71 is arranged in parallel with the intermediate transmission shaft 51 so that the rotation of the intermediate transmission shaft 51 can be transmitted through the chain mechanism 73 to the driven side transmission shaft 71.

The motor 25 is connected to the driven side transmission shaft 71, and the differential mechanism 58 is connected to the output side of the driven side transmission shaft 71, so that either the torque transmitted through the aforementioned chain mechanism 73 to the driven side transmission shaft 71 or the torque generated by the motor 25 is transmitted directly to the differential mechanism 58.

Incidentally, the present invention should not be limited to the foregoing embodiments but can be modified on the basis of the gist thereof in various manners, which should not be excluded from the scope of the present invention.

## Claims

1. A vehicular motor system comprising: an engine adapted to run by burning a fuel; a motor enabled to rotate its rotor by feeding an electric current to the coil of its stator and to generate an electric power by having its rotor rotated; a clutch arranged between said engine and said motor for transmitting the rotation selectively between a transmission shaft connected to said rotor and the output shaft of said engine; a differential mechanism connected to said transmission shaft for transmitting the rotation from said transmission shaft to righthand and lefthand drive wheels; generation means for generating an electric power from the rotation of said engine; and starting means for starting said engine.

2. A vehicular motor system according to Claim 1, further comprising: a final reduction gear mechanism arranged between said transmission shaft and said differential mechanism.

3. A vehicular motor system according to Claim 2, further comprising: fluid coupling means arranged between said engine and said clutch.

4. A vehicular motor system comprising: an engine adapted to run by burning a fuel; a motor enabled to rotate its rotor by feeding an electric current to the coil of its stator and to generate an electric power by having its rotor rotated; a first clutch arranged between said engine and said motor for transmitting the rotation selectively between a transmission shaft connected to said rotor and the output shaft of said engine; a differential mechanism for transmitting the transmitted rotation to righthand and lefthand drive wheels; a second clutch arranged between said motor and said differential mechanism for transmitting the rotation selectively between said transmission shaft and the rotational shaft of said differential gear mechanism; and generation means for generating an electric power from the rotation of said engine.

5. A vehicular motor system according to Claim 4, further comprising: a final reduction gear mechanism arranged between said transmission shaft and said differential mechanism.

6. A vehicular motor system according to Claim 2 or 5, wherein said differential mechanism is connected to said righthand and lefthand drive wheels .

7. A vehicular motor system according to Claim 2 or 5, wherein said differential mechanism is connected to said righthand and lefthand drive wheels, further comprising a counter gear arranged between said transmission shaft and said final reduction gear mechanism.

8. A vehicular motor system according to Claim 7, wherein said counter gear is arranged at a middle portion of said transmission shaft.

9. A vehicular motor system according to Claim 7, wherein said counter gear is arranged at a rear portion of said transmission shaft.

10. A vehicular motor system according to Claim 2 or 5, wherein said differential mechanism is connected to righthand and lefthand front wheels, and wherein said transmission shaft includes two transmission shafts oriented in parallel to each other, further comprising a chain mechanism arranged between said two parallel transmission shafts.

11. A vehicular motor system according to Claim 10, wherein said engine has its rotational shaft arranged in the longitudinal direction of the vehicle.

12. A vehicular motor system comprising: an engine adapted to be run by burning a fuel; a motor enabled to rotate its rotor by feeding an electric current to the coil of its stator and to generate an electric power by having its rotor rotated; a first shaft connected to the rotor of said motor; a clutch for transmitting the rotation selectively between said first shaft and said engine; a second shaft arranged in parallel with said first shaft adapted to be rotated by the rotation transmitted from said first shaft; and a pair of gears arranged between said first shaft and said second shaft, wherein said stator is fixed in a casing, wherein said first shaft and said second shaft are supported at two points by a casing, and wherein the gear arranged on said first shaft is supported from the outside by a casing.

13. A vehicular motor system comprising: an engine adapted to be run by burning a fuel; a motor enabled to rotate its rotor by feeding an electric current to the coil of its stator and to generate an electric power by having its rotor rotated; a first shaft connected to the rotor of said motor; a clutch for transmitting the rotation selectively between said first shaft and said engine; a second shaft arranged in parallel with said first shaft adapted to be rotated by the rotation transmitted from said first shaft; and a pair of gears arranged between said first shaft and said second shaft, wherein said clutch, said motor and said paired gears are housed in a clutch casing, a center casing and a rear cover, respectively, wherein the stator of said motor is fixed in said center casing, wherein said first shaft has its one end supported by said clutch casing and its other end supported through the boss of the gear thereof from the outside by said center casing and said rear cover, and wherein said second shaft has its one end supported by said clutch casing and its other end supported through the boss of the gear thereof from the outside by said center casing.
